Europäisches Patentamt

**European Patent Office**

**Office européen des brevets**

(19)

(11) Veröffentlichungsnummer: **0 174 970 B1**

# (12) EUROPÄISCHE PATENTSCHRIFT

(45) Veröffentlichungstag der Patentschrift:
**12.10.88**

(21) Anmeldenummer: **85901433.4**

(22) Anmeldetag: **16.03.85**

(86) Internationale Anmeldenummer:
**PCT/EP 85/00114**

(87) Internationale Veröffentlichungsnummer:
**WO 85/04469 (10.10.85 Gazette 85/22)**

(51) Int. Cl.⁴: **F 27 B 9/18,** F 27 D 3/00,
C 04 B 20/06

(54) **SCHACHTANORDNUNG FÜR THERMISCHE UND/ODER STOFFÜBERTRAGUNGSVORGÄNGE ZWISCHEN EINEM GAS UND EINEM SCHÜTTGUT.**

(30) Priorität: **24.03.84 DE 3410894**

(43) Veröffentlichungstag der Anmeldung:
**26.03.86 Patentblatt 86/13**

(45) Bekanntmachung des Hinweises auf die Patenterteilung:
**12.10.88 Patentblatt 88/41**

(84) Benannte Vertragsstaaten:
**AT BE CH DE FR GB LI NL SE**

(56) Entgegenhaltungen:
**DE-B-1 243 827**
**DE-C-607 786**
**DE-C-848 172**
**FR-A-1 139 777**
**FR-A-1 424 099**
**GB-A-157 194**

(73) Patentinhaber: **PERFLUCTIV- CONSULT AG,
Rittergasse 22a, CH- 4001 Basel (CH)**

(72) Erfinder: **SUNDERMANN, Erich, Bismarckstr. 14,
D-3300 Braunschweig (DE)**
Erfinder: **LAURIEN, Hanno, Siekbruch 62a, D-3300
Braunschweig (DE)**
Erfinder: **VAHLBRAUK, Wolfgang, Laubanstr. 8,
D-3300 Braunschweig (DE)**
Erfinder: **REYE, Hans, Otternhagener Str. 17,
D-3057 Neustadt 1 (DE)**

(74) Vertreter: **Döring, Rudolf, Dr.- Ing., Patentanwälte
Dr.- Ing. R. Döring Dipl.- Phys. Dr. J. Fricke
Jasperallee 1a, D-3300 Braunschweig (DE)**

## Beschreibung

Die Erfindung betrifft eine Schachtanordnung für thermische und/oder Stoffübertragungsvorgänge Zwischen einem Gas und einem rieselfähigen Schüttgut mit einer einheitlichen Körnung von mindestens 6 mm, bei Welcher der Innenraum des Schachtes in Kammern zur Aufnahme von die Kammern nur teilweise füllenden Haufwerken des Schüttgutes durch Zwischenböden Unterteilt ist, die verstellbare Bodenelemente zum chargenwesen Hindürchfördern der Haufwerke durch den Schacht aufweisen, und bei der in den Schachtwandungen freie Durchtrittsöffnungen für das Gas zu wenigstens einigen Kammern in den freien Raum oberhalb des jeweiligen Haufwerkes angeordnet sind und oberhalb oder im oberen Teil des Schachtes eine Einrichtung zum Zuführen und gleichmäßigen Verteilen des die Kammern jeweils nur teilweise füllenden Vordosierten Gutes über den Schachtquerschnitt auf einen den Boden der obersten Kammer bildenden Rost vorgesehen ist.

Es sind Schachtanordnungen (DE-AS 1 165 447) zum Blähen poröser Zuschlagstoffe bekannt, deren übereinander angeordnete Kammern mit dem in der gewünschten Korngröße gebrochenen Gut, wie Ton oder Ölschiefer, nur teilweise gefüllt werden, wobei die Böden der Kammern jeweils aus um ihre Längsachse drehbaren Lamellen bestehen. In den Schachtwandungen sind Durchtrittsöffnungen für die Einleitung von Brenngasen jeweils zwischen dem in der jeweiligen Kammer befindlichen Haufwerk und dem darüber befindlichen Boden angeordnet. Um ein Zusammenbacken des Gutes zu vermeiden, erfolgt eine mechanische Auflockerung der Haufwerke dadurch, daß die Böden der Kammern rotierend angetrieben und mit nach unten weisenden bis in Nähe des nächsten Bodens reichenden Zähnen ausgerüstet sind.

Die vorgenannte Schachtanordnung ermöglicht nur eine relativ geringe Energieausbeute, da die Brenngase lediglich über die jeweiligen Kammerböden und die dem Zwischenraum zugekehrten Oberflächen der Haufwerke auf das zu behandelnde Gut ihre Wärme übertragen können. Außerdem erfordert die Anordnung rotierbarer Böden, welche aus um ihre Längsachse schwenkbaren Lamellen bestehen, einen erheblichen Aufwand, welcher durch die mit den Böden verbundenen und nach unten bis in die Nähe des nächsten Bodens reichenden Zähne noch erhöht wird.

Um die bei der vorbeschriebenen Ausbildung des Schachtes ungünstige und ungleichmäßige Wärmeübertragung von den Gasen auf die Gutteilchen des Haufwerkes zu verbessern, ist es bekannt geworden (DE-AS 1 243 827), beiderseits eines Schachtes Brennkammern vorzusehen, welche über Durchtrittsöffnungen in der Schachtwandung mit dem Schachtinneren verbunden sind, wobei das Schachtinnere wiederum durch Böden aus drehbaren Klappen in Kammern unterteilt ist. Durch eine entsprechende Steuerung der drehbaren Klappen und durch eine die beiden Brennkammern wechselweise abdeckende Beschickungsvorrichtung soll ein wechselweises Anblasen des jeweils von Kammer zu Kammer fallenden Gutes und dessen Verwirbelung erfolgen, durch die eine gleichmäßigere Erwärmung der einzelnen Gutteilchen angestrebt wird. Trotz des erheblichen Aufwandes für eine derartige Steuerungseinrichtung ist es jedoch praktisch nicht möglich, das Gut gleichmäßig zu erwärmen, da die Überführungszeit von Kammer zu Kammer nur relativ kurz ist und in den Zeitspannen außerhalb des freien Falles des Gutes dieses an der Oberfläche bzw. im Bereich des jeweiligen Kammerbodens stärker erwärmt wird als im Inneren des Haufwerkes.

Der Erfindung liegt die Aufgabe zugrunde, eine Schachtanordnung der einleitend genannten Art so auszubilden, daß ein gleichmäßiger thermischer und/oder Stoffübertragungsvorgang zwischen dem Gas und dem Schüttgut erreicht wird, der zu einer erheblichen Energieeinsparung und Verminderung der Anzahl der notwendigen Kammern und damit zu einer geringeren Bauhöhe des Schachtes führt.

Zur Lösung vorstehender Aufgabe kennzeichnet sich die einleitend genannte Schachtanordnung durch die im Kennzeichen der unabhängigen Ansprüche genannten Merkmale.

Die vorgenannte Schachtanordnung ist für die verschiedensten thermischen und/oder Stoffübertragungsvorgänge geeignet, wie beispielsweise für die Erwärmung oder Kühlung des Schüttgutes oder aber auch des Gases, für dass Härten, Aufkohlen, Nitrieren oder Tempern von metallischen Werkstoffen sowie für das Vergüten und Tempern nichtmetallischer organischer Werkstoffe, für das Trocknen aminosilikathaltiger Granulate zur Vorbereitung eines nachfolgenden Blähprozees, für das Tiefkühlen von Lebensmitteln, wie etwa kleine Backwaren oder dgl. Die Anordnung eignet sich darüber hinaus auch für Stoffübertragungsvorgänge zur Erzielung einer Gasreinigung z. B. durch adsorptive Bindung schädlicher Bestandteile in Abgasen.

Fur die Erzielung gleichförmiger Übertragungsvorgänge unter Einbeziehung aller Gutteilchen eines jeden Haufwerkes ist es wichtig, daß die Gutteilchen in den einzelner Etagen jeweils Haufwerke gleichbleibender Schichtdicke bilden, welche durch die Ausbildung der Kammerböden in Form der beschriebenen Roste von den in das Schacht innere eingeleiteten Gasen oder ggf. auch Dämpfen gleichmäßig umströmt werden, wobei eine intensive Verwirbelung der Gase oder Dämpfe in den Lückenräumen zwischen den in dem Haufwerk befindlichen Gutteilchen errecht wird, die zu einer Verbesserung des Stoffübertragungsvorganges von den Gutteilchen auf das Gas oder umgekehrt beiträgt.

Es sind zwar Schachtanordnungen für das Brennen von Zement, Kalk, Gips oder dgl. bekannt (DE-PS 31 932), bei denen das Schachtinnere durch seitlich aus den Schachtwandungen herausziehbare Roste unterteilt ist, um das Brenngut etagenweise durch den Schacht hindurchzufördern, jedoch ermöglicht dieser Schacht durch die vollständige Füllung der Kammern mit dem Schüttgut keine gleichmäßige Durchströmung bzw. keinen gleichförmigen Übertragungsvorgang zwischen dem Gas und den Schüttgutteilchen, abgesehen davon, daß ein etagenweises Hindurchführen des Schüttgutes durch das Schachtinnere bei vollständig gefüllten Kammern praktisch ausgeschlossen ist. Hinzu kommt, daß bei der vorgenannten Ausbildung der Schachtanordnung erhebliche Probleme durch Brückenbildung des Schüttgutes praktisch unvermeidbar sind.

Der gleichförmige Stoff- bzw. Energieaustausch erfordert neben der Bildung von Haufwerken gleichbleibender Schichtdicke in den einzelnen Etagen, daß dem Entstehen von Gutbrücken in den einzelnen Etagen entgegengewirkt wird bzw. entstandene Gutbrücken mit Sicherheit zerstört werden, noch ehe eine Verfestigung dieser Brücken eintreten kann. Durch die beschriebene Ausbildung der Roste und die Beweglichkeit der Roststäbe sind die vorgenannten Forderungen mit einem außerordentlich geringen baulichen Aufwand erfüllbar. Durch entsprechende zeitlich gesteuerte Antriebseinrichtungen für die beweglichen Roststäbe bei der Überführung der Haufwerke von Etage zu Etage läßt sich ein über die gesamte Querschnittsfläche des Schachtes gleichmäßiger Rieselstrom erzeugen, wobei durch die beweglichen Roststäbe im Zuge der jeweiligen Auflösung des auf diesen Roststäben befindlichen Haufwerkes auch eine Auflösung evtl. entstandener Brücken erreicht wird. Die angestrebte Rieselbewegung und Auflösung der Gutbrücken kann entweder durch ein zeitlich gesteuertes Absenken oder durch ein zeitlich gesteuertes Anheben der beweglichen Roststäbe erzeugt werden, wobei die Überführung der Roststäbe in zwei oder drei verschiedene Ebenen in Abhängigkeit von dem jeweiligen Gut und der Form der Gutteilchen eingestellt werden kann. Durch entsprechende vorherige Rieselversuche kann der jeweils günstigste Bewegungsablauf der Roststäbe ermittelt werden.

Die Anordnung und Ausbildung der Roststäbe erfolgen zweckmäßig in der Weise, daß die beweglichen Roststäbe eines jeden Stabrostes durch eine Verbindung ihrer Enden wenigstens eine Baueinheit bilden, welche durch die Betätigungseinrichtungen und die steuerbare Antriebseinrichtung aus der Ebene der festen Roststäbe herausbewegbar ist. Dabei ist die bereits beschriebene Überführung der beweglichen Roststäbe durch ihre Zusammenfassung in zwei Baueinheiten je Rost auch in zwei oder drei Ebenen möglich, um in Abhängigkeit von der Form und Größe der Schüttgutteilchen sowie auch der Roststäbe die Überführung der Haufwerke von Etage zu Etage bei gleichbleibender Schichtdicke der Haufwerke über den gesamten Schachtquerschnitt sicherzustellen.

Weitere Einzelheiten über die Ausbildung und die Betätigung der Roststäbe bzw. der aus den Roststäben gebildeten Baueinheiten ergeben sich aus den Unteransprüchen, in denen auch die verschiedenen Möglichkeiten der Ausbildung des Schachtes aus ringförmig geschlossenen Modulteilen mit jeweils einem Rost und zumindest teilweise in den Wandungen vorgesehenen Durchtrittsöffnungen für die Zu- und Abführung der Gase sowie die Ausbildung der Roste als seitlich durch verschließbare Fensteröffnungen in die Schachtwandungen einschiebbare Baueinheiten beschrieben sind.

Um ein Verschließen der zwischen den Roststäben befindlichen Spalte durch Schüttgutteilchen mit Sicherheit zu vermeiden, sind besondere Maßnahmen notwendig. Zu diesem Zweck sieht die Erfindung vor, daß die Roststäbe im Querschnitt gesehen in ihrem oberen Teil eine hinterschnittene Profilierung aufweisen und mit aufgeschobenen austauschbaren, reiterförmigen Profilteilen ausgerüstet sind, die zweckmäßigerweise hufeisenförmig mit in Längsrichtung der Roststäbe weisenden Vorsprüngen als Anschläge mit benachbarten Profilteilen ausgebildet sind.

Durch Verwendung der genannten reiterförmigen Profilteile unterschiedlicher Abmessungen auf den zu einem Rost gehörenden Stäben kann gleichzeitig eine Strömungsbeeinflussung des durch das Haufwerk hindurchgeführten Gases erreicht werden, da durch die aufgesetzten reiterförmigen Profilteile der freie Durchtrittsquerschnitt zwischen den benachbarten Roststäben beeinflußt werden kann.

Um die bereits oben beschriebene mögliche Brückenbildung zu vermeiden und eine Auflockerung bzw. partielle Umschichtung der Gutteilchen eines Haufwerkes zu erreichen, kann es zweckmäßig sein, unterhalb des Rostes der einen oder anderen Kammer einen gitterrostförmigen Einsatz zur Bildung paralleler Strömungskanäle vorzusehen und um horizontale Achsen drehbare Klappen in den Strömungskanälen anzuordnen, welche den Feldern eines Schachbrettes entsprechend wechselweise oder in Gruppen in die Schachtebene oder senkrecht hierzu verschwenkbar sind. Um die Klappen jeweils gruppenweise betätigen zu können, empfiehlt es sich, je Klappenreihe zwei übereinander angeordnete horizontale Achsen für die wechselweise Anordnung der Klappen vorzusehen.

Schließlich ist es zur Trennung von einzelnen Haufwerken bzw. Haufwerksgruppen, von benachbarten Gruppen, beispielsweise wenn in einem Schacht befindliche Haufwerksgruppen von unterschiedlichen Gasen durchströmt werden sollen, zweckmäßig, wenn zum Zwecke dieser Trennung zwischen zwei benachbarten Rosten eine aus schwenkbaren Lamellen gebildete und durch Verstellung der Lamellen in die Schließ- und Offenstellung überführbare Trennwand vorgesehen ist.

Statt der vorbeschriebenen Schachtanordnung mit den teils aus der Rostebene herausbewegbaren Roststäben kann die Anordnung auch gemäß Anspruch 16 ausgebildet sein, bei der die Roste aus ortsfesten Tragstäben in Verbindung mit darüber angeordneten dachförmig geneigt zueinander verlaufenden teils beweglichen geschlitzten Lamellen bestehen. Diese Ausbildung ist besonders für einen Betrieb des Schacht es in Temperaturbereichen unterhalb von etwa 800 bis 900° C geeignet.

Die Zeichnung gibt in schematischer Darstellung ein Ausführungsbeispiel der Erfindung wieder.

Es zeigen:

Fig. 1     einen Längsschnitt durch einen Schacht gemäß der Erfindung mit unterschiedlichen Behandlungszonen des Gutes,

Fig. 2a     in vergrößerter Darstellung einen Teil des Schnittbildes gemäß Fig. 1 in Höhe eines Rostes, aus dem Einzelheiten der Rostanordnungen erkennbar sind,

Fig. 2b     eine Draufsicht auf die Anordnung nach Fig. 2a,

Fig. 3a und 3b     mögliche Stellungen der Roststäbe bei ihrer Anordnung und Ausbldung gemäß den Fig. 2a und 2b,

Fig. 4     in perspektivischer Darstellung zwei Roststäbe mit teils aufgebrachten reiterförmigen Profilteilen,

Fig. 5     eine Teildraufsicht auf Roststäbe gemäß Fig. 4 mit aufgebrachten reiterförmigen Profilteilen,

Fig. 6     einen Teillängsschnitt durch den Bereich der untersten Etage des Schachtes nach Fig. 1,

Fig. 7     eine Ansicht von unten gegen die über den Schachtquerschnitt verteilt angeordneten Klappen gemäß Fig. 6,

Fig. 8     in vergrößerter Darstellung einen Querschnitt durch eine der Klappen nach den Fig. 6 und 7,

Fig. 9     einen Teillängsschnitt durch einen Schacht mit seitlich einschiebbaren Rosten,

Fig. 10     eine schematische Schnittdarstellung ähnlich der Fig. 2a durch eine von den Figuren 2 bis 9 abweichende Rostausbildung.

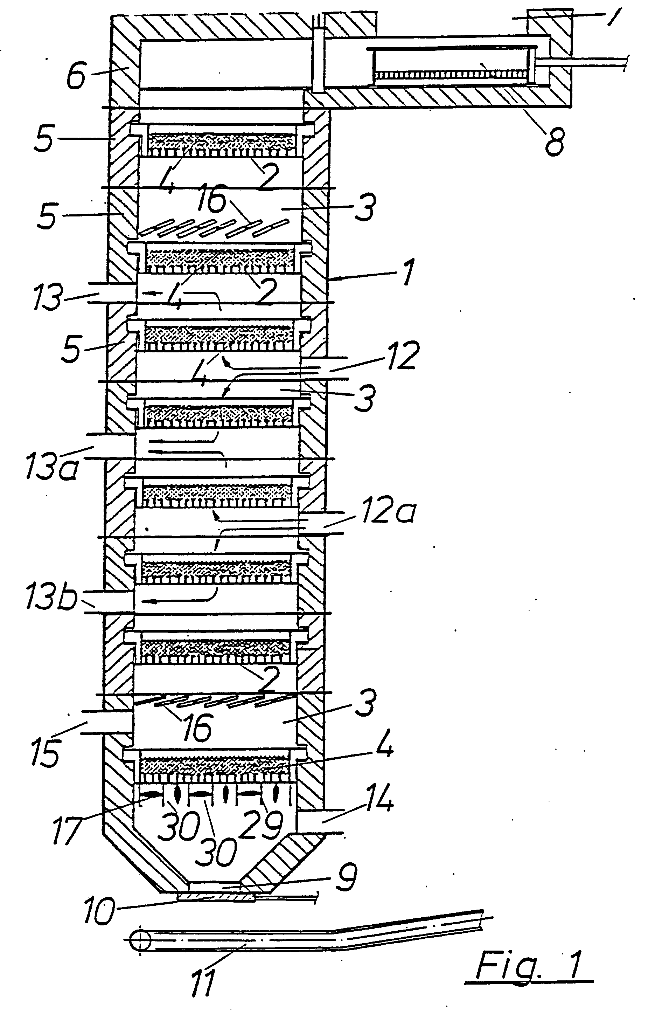

Der in Fig. 1 wiedergegebene Schacht weist eine insgesamt mit 1 bezeichnete Schachtwandung auf und hat einen quadratischen oder rechteckigen Querschnitt. In dem Schacht sind in Abständen übereinander in den Wandungen 1 Roste 2 so angeordnet, daß zwischen benachbarten Rosten jeweils Kammern 3 entstehen, welche nur zum Teil durch ebene Haufwerke 4 aus dem zu behandelnden körnigen oder granulierten bzw. stückigen Gut gefüllt sind, so daß zwischen einer jeden Oberfläche des Haufwerkes 4 und dem darüber befindlichen Rost 2 ein freier Zwischenraum verbleibt.

In dem dargestellten Beispiel ist der Schacht aus ringförmig geschlossenen und übereinander angeordneten Modulteilen 5 mit jeweils einem darin gehaltenen Rost 2 zusammengesetzt, so daß der Schacht durch entsprechende Anzahl der Modulteile 5 in unterschiedlichen Höhen und mit entsprechend unterschiedlicher Anzahl von Etagen erstellt werden kann. An seinem unteren Ende ist der Schacht mit einer durch einen Schieber 10 Verschließbaren Austragsöffnung 9 für das in dem Schacht behandelte Gut ausgerüstet. Unterhalb des Schachtes ist ein Förderer 11 erkennbar, auf dem das aus dem Schacht austretende Gut einer Weiterver- oder, bearbeitung zugeführt wird.

Nach oben hin ist der Schacht durch ein als Eintrags schleuse ausgebildetes Abschlußgehäuse 6 verschlossen. In dem seitlich ausladenden Teil des Abschlußgehäuses 6 ist eine Dosier- und Verteileinrichtung 7 schematisch dargestellt, in welcher die jeweils für ein Haufwerk 4 vorgesehene Menge des Gutes aufgenommen wird und von der es in Form eines flachen Haufwerkes mit über den Querschnitt gleicher Schichtdicke in einen verschiebbaren Formkasten 8 überführt wird, welcher nach unten hin durch einen Rost abgeschlossen ist, welcher dem Rost 2 in den Modulteilen 5 des Schachtes entspricht und mit einer in der Zeichnung nicht wiedergegebenen Betätigungseinrichtung ausgerüstet ist, um wenigstens einen Teil der Roststäbe aus der Rostebene herauszubewegen, wie dies im Zusammenhang mit den im Schacht angeordneten weiteren Rosten 2 noch beschrieben wird. Aus dem Formkasten 8 wird das Haufwerk in die im Schacht oberste Kammer 3a bzw. auf den diese Kammer als Boden begrenzenden Rost überführt.

In der Wandung 1 des Schachtes sind in den Kammern 3 bzw. in den von den Kammern gebildeten freien Zwischenräumen ausmündende Zu- bzw. Abströmöffnungen 12, 12a, 13, 13a und 13b sowie 14 und 15 vorgesehen, die mit entsprechenden in der Figur nicht wiedergegebenen Gas zu- bzw. -abführungsleitungen verbunden sind und die ihrersets zu Fördereinrichtungen bzw. zu Einrchtungen für die Aufbereitung der Gase oder ggr. auch der Dämpfe führen, je nachdem, mit welchen Gasen oder Dämpfen·das in den Haufwerken 4 befindliche Gut behandelt werden soll.

In dem dargestellten Schacht nach Fig. 1 ist zwischen den beiden obersten Rosten 2 bzw. den beiden obersten Kammern 3 eine aus schwenkbaren Lamellen 16 gebildete und durch Verstellung der Lamellen in die Schließ- und Offenstellung überführbare Trennwand vorgesehen. Eine ähnliche Trennwand aus Lamellen 16 ist zwischen der im Schacht untersten Kammer und der darüberliegenden Kammer angeordnet. Schließlich ist unterhalb des im Schacht untersten Rostes 2 noch die Anordnung eines gitterrostförmigen Einsatzes 29 erkennbar, welcher zur Bildung paralleler Strömungskanäle 30 dient, und in denen Klappen 17 angeordnet sowie um horizontale Achsen 27, 28 drehbar sind und teils eine Sperrstellung sowie teils eine Durchlaßstellung einnehmen.

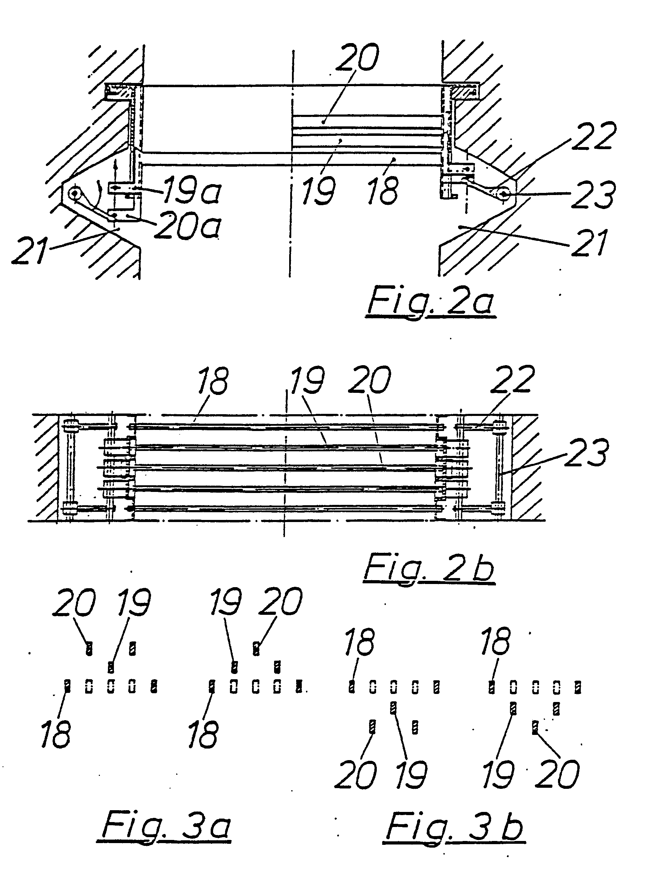

Die in dem Schacht angeordneten Roste 2 bestehen gemäß den Fig. 2a und 2b teils aus feststehenden Roststäben 18 sowie teils aus beweglichen Roststäben 19 und 20, wobei letztere gegenüber den feststehenden Roststäben 18 aus der Rostebene nach oben bewegbar sind, um die freien Zwischenräume zwischen benachbarten Roststäben vorübergehend zu vergrößern.

In der Fig. 2a ist im linken Teil die Stellung der Roststäbe 18 bis 20 in der Rostebene wiedergegeben, während im rechten Teil die Roststäbe 19 und 20 in unterschiedlich angehobener Position gegenüber der Rost ebene dargestellt sind. Zum Anheben der Roststäbe 19 und 20 dienen in Nischen 21 auf der Innenseite der Schachtwandung 1 vorgesehene Kurbel- bzw. Schwenkarme 22, die von außen über eine Betätigungswelle 23 verschwenkbar sind. Die beweglichen Roststäbe 19 und 20 sind gegenüber den festen Roststäben 18 verlängert ausgebildet und zu einer heb- und senkbaren Baueinheit zusammengefaßt, wobei die Verlängerung der Roststäbe 19 und 20 gemäß Fig. 2a die Form von unterschiedlich langen Abkröpfungen 19a und 20a aufweist. Dies hat zur Folge, daß bei einer Schwenkbewegung der Kurbelarme 22 um die Schwenkachse 23 die Roststäbe 19 und 20 in unterschiedliche Höhenlagen überführt werden, wie dies aus Fig. 2a in der rechten Hälfte ersichtlich ist.

Statt eines Anhebens der beweglichen Roststäbe 19 und 20 kann umgekehrt auch eine Absenkung dieser Roststäbe vorgesehen sein, so daß sich in Abhängigkeit von der Hub- bzw. Absenkbewegung der Roststäbe 19 und 20 unterschiedliche Positionen der Roststäbe zueinander ergeben können, wie sie beispielsweise in den Fig. 3a und 3b wiedergegeben sind.

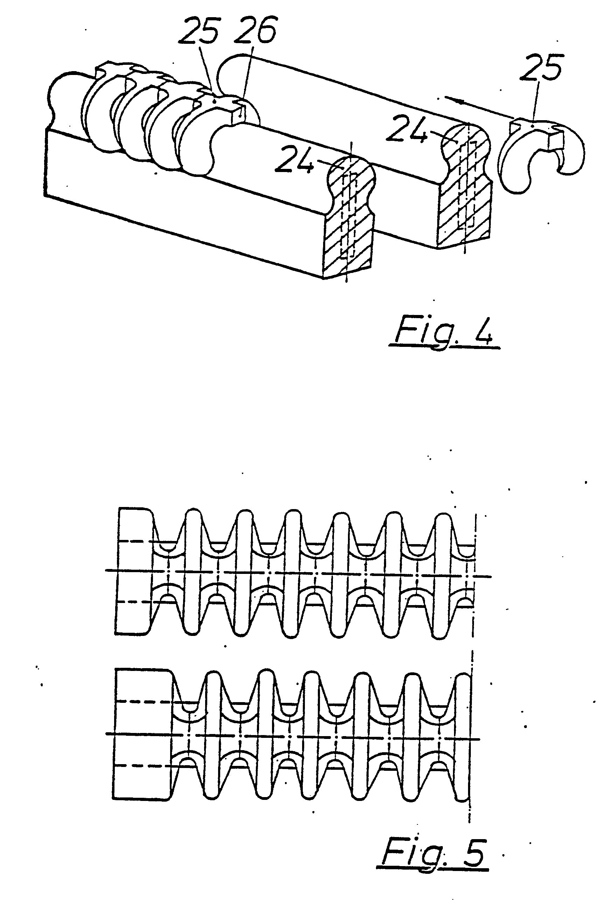

Die in den Fig. 2a und 2b schematisch wiedergegebenen Roststäbe weisen in der Praxis zweckmäßig die in Fig. 4 und 5 wiedergegebene Form auf. Man erkennt, daß die Roststäbe, welche als Voll- oder Hohlprofilstäbe ausgebildet sein können, im Querschnitt gesehen in ihrem oberen Teil eine hinterschnittene Profilierung 24 aufweisen und mit aufgeschobenen austauschbaren, reiterförmigen Profilteilen 25 ausgerüstet sind, welche auf die Roststäbe aufgeschoben werden. Die reiterförmigen Profilteile sind hufeisenförmig ausgebildet und mit in Längsrichtung der Roststäbe weisenden Vorsprüngen 26 als Anschläge mit benachbarten reiterförmigen Profilteilen ausgerüstet. Bei dichter Packung der reiterförmigen Profilteile auf den Roststäben ergibt sich für die Roststäbe eine Form, wie sie in der Draufsicht der Fig. 5 auf zwei benachbarte Roststäbe ersichtlich ist.

Die reiterförmigen Profilteile 25 bewirken, daß die in jedem Haufwerk 4 unterste Schicht des Gut es nicht die Zwischenräume zwischen benachbarten Roststäben verschließen kann, auch wenn das Gut aus zylinderförmigen Teilchen bestehen sollte, bei dem ohne die reiterförmigen Profilteile 25 durch die Rollbewegung der Gutteilchen mit einer reihenförmigen Anordnung in den Zwischenräumen zwischen den Roststäben gerechnet werden muß. Die reiterförmigen Profilteile können bei vorgegebenem Abstand der Roststäbe einen unterschiedlichen Durchmesser aufweisen, so daß hierdurch der prozentuale Anteil des freien Durchströmquerschnittes durch die Roste 2 entsprechend eingestellt bzw. verändert werden kann. Es ist ferner möglich, durch Verwendung von reiterförmigen Profilteilen 25 unterschiedlichen Querschnittes die örtlichen Durchströmverhältnisse zu beeinflussen.

Der in der Fig. 1 wiedergegebene Schacht kann beispielsweise für die Erwärmung oder aber auch für die Abkühlung eines zu behandelnden Gutes vorgesehen sein. Zu diesem Zweck können beispielsweise die Durchtrittsöffnungen 12 und 12a zusammengefaßt an ein Gebläse angeschlossen werden, während die Durchtrittsöffnungen 13, 13a und 13b ihrerseits an eine gemeinsame Gasabführungsleitung angeschlossen sind, die ggf. Teil einer Kreislaufleitung darstellt und z. B. über einen Wärmetauscher wiederum mit dem Gebläse verbunden sein kann. Das in dem Schacht unterste Haufwerk 4 kann durch Zuführung eines anderen oder anders temperierten Gases und dessen Abführung bzw. ggf. auch durch einen Gaskreislauf durch die Zu- und Abströmöffnungen 14 bzw. 15 beaufschlagt werden. Dabei kann in dem genannten untersten Haufwerk durch das gitterrostförmige Einsatzteil 29 in Verbindung mit den Klappen 17 eine partielle Durchströmung dieses Haufwerkes erfolgen und durch Einstellung entsprechender Durchströmgeschwindigkeiten der Auflockerungspunkt des in dem Haufwerk befindlchen Gutes erreicht bzw. überschritten werden, so daß im Bereich der durchströmten Kanäle 30 eine partielle Bewegung der Gutteilchen erfolgt und diese durch die Auflockerung und die Strömung in den Bereich der nichtdurchströmten Felder gelangen. Durch einen Wechsel der Stellung der Klappen 17 kann eine Rückführung und umgekehrte Bewegung der Gutteilchen erzielt werden. Diese Arbeitsweise ist besonders günstig, wenn bei der Durchströmung des untersten Haufwerkes die Gutteilchen zum Zusammenhaften neigen sollten. Durch die oberhalb des untersten Haufwerkes befindlichen Lamellen 16 ergibt sich für das unterste Haufwerk eine getrennte Behandlungszone. Dabei bildet das oberhalb der unteren Lamellen 16 befindliche Haufwerk eine zusätzliche Sperrschicht, welche von keinem Behandlungsgas durchströmt wird. Demgegenüber werden in dem dargestellten Beispiel die in Höhenrichtung nächst folgenden vier Haufwerke bei einem Anschluß der Durchtrittsöffnungen 12 und 12a an eine Gaszuführungsleitung in Richtung der dargestellten Pfeile teils von oben nach unten und teils von unten nach oben durchströmt und das Behandlungsgas durch die Austrittsöffungen 13, 13a und 13b abgeführt. Die genannten Austrittsöffnungen können an eine gemeinsame Gasabführungsleitung angeschlossen sein. Durch geeignete Steuerungseinrichtungen kann die Strömungsrichtung der Gase gegenüber den dargestellten Pfeilen ohne Schwierigkeiten umgekehrt werden, so daß ein Wechsel der Strömungsrichtungen während der Verweilzeiten der Haufwerke in den einzelnen Etagen ohne weiteres möglich ist.

Das in dem dargestellten Schacht nach Fig. 1 zweite Haufwerk von oben bildet wiederum eine Sperrschicht, da oberhalb dieses Haufwerkes eine weitere von schwenkbaren Lamellen 16 gebildete Trennwand vorgesehen ist, welche sich während der Durchströmung der Haufwerke in der Schleßstellung befindet. Dieses Haufwerk wird jeweils in derjenigen Zeitspanne gebildet, während der die anderen Haufwerke in der beschriebenen Weise durchströmt werden.

Wenn das in dem Schacht unterste Haufwerk seinen durch die Durchströmung angestrebten Endzustand erreicht hat, wird durch Überführung der beweglichen Roststäbe dieses Rostes in die Öffnungsstellung das Haufwerk aufgelöst und bei geöffnetem Schieber 10 auf den Weiterförderer 11 überführt. Nach der erfolgten Rückführung der beweglichen Roststäbe in die Ebene der festen Roststäbe werden die schwenkbaren Lamellen 16 oberhalb dieses Rostes in die Offenstellung verschwenkt und durch eine zeitlich gesteuerte Betätigung der Roststäbe des oberhalb dieser Lamellen angeordneten Rostes das auf diesen befindliche Haufwerk in der bereits beschriebenen Weise aufgelöst und in Form eines flächigen Rieselstromes so auf den untersten Rost durch freien Fall weitergeleitet, daß eine über den Schachtquerschnitt gleichbleibende Schichtdicke erreicht wird. Dieser Vorgang wiederholt sich nun von Rost zu Rost, bis der im Schacht oberste Rost frei ist. Bei geschlossener Stellung der im oberen Teil des Schachtes vorgesehenen Lamellen 16 wird dann mittels des verschiebbaren Formkastens 8 das Gut für die Bildung des obersten Haufwerkes in den Schacht überführt.

Für die Betätigung der beweglichen Roststäbe können Antriebseinrichtungen verschiedenster Art, z. B. hydraulische, elektrische oder elektromechanische Antriebe, mit entsprechenden Steuerungsmöglichkeiten verwendet werden, um sowohl die Hubhöhen als auch den zeitlichen Verlauf der Hubbewegungen verändern zu können.

Bei der beschriebenen Arbeitsweise des Schachtes nach Fig. 1 kann je nach Art des Gutes und der Gase eine Trocknung oder Erhitung bzw. eine Kühlung des Gutes erfolgen und/oder eine chemische Behandlung des Gut es bei Verwendung entsprechender Gase bzw. Dämpfe vorgenommen werden.

Bei einem Betrieb des Schachtes unter Anwendung von Gasen mit höheren Temperaturen bis zu 1.350° C hat sich als Material für die Roststäbe und die übrigen tragenden Teile der Roste sowie bei Anordnung eines gitterrostförmigen Einsatzes für diesen Einsatz und die darin gehaltenen Klappen und Achsen SisiC und bei noch höheren Temperaturer bis zu 1.600° C reaktionsgesintertes SiC bewährt.

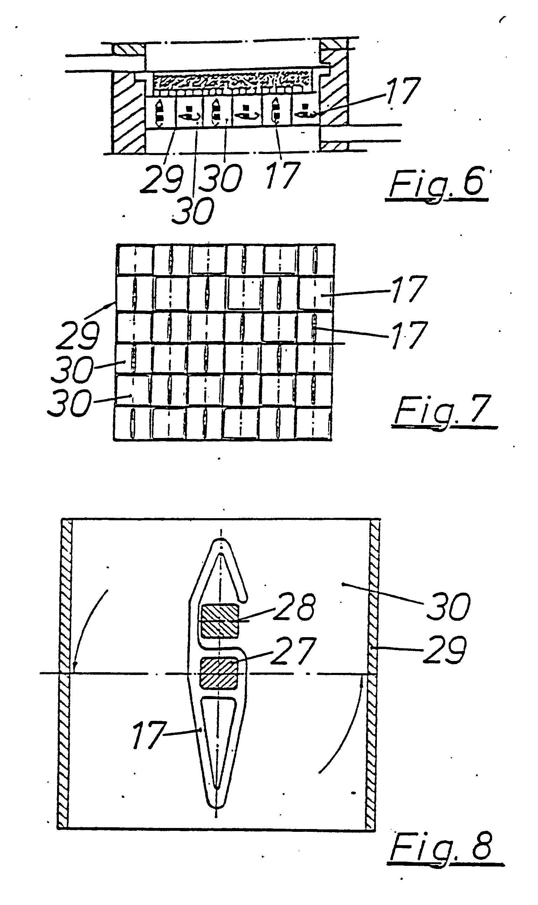

Die Fig. 6 bis 9 zeigen Einzelheiten hinsichtlich der Anordnung und Ausbildung der um ihre horizontalen Achsen drehbaren Klappen 17 innerhalb der Strömungskanäle 30 des gitterrostartigen Einsatzes 29. Die Klappen 17 sind in den Strömungskanälen entsprechend den Feldern eines Schachbrettes so gehalten, daß nebeneinanderliegende Klappen eine unterschiedliche Stellung einnehmen. Um die stellungsgleichen Klappen 17 einer jeden Reihe gemeinsam verstellen zu können, sind zwei übereinander angeordnete horizontale Achsen 27 und 28 gemäß Fig. 8 vorgesehen, auf denen die Klappen 17 jeder Reihe wechselweise gehalten sind. Bei der praktischen Ausführung gemäß Fig. 8 nehmen die auf der Achse 27 gehaltenen Klappen 17 in einer Aussparung die Achse 28 der jeweils benachbarten Klappen auf, ohne daß diese Achse 28 die Schwenkbewegung der auf der Achse 27 gehaltenen Klappen behindert. Auf diese Weise ist es möglich, alle Klappen in die Sperrstellung oder alle Klappen in die Offenstellung bzw. die benachbarten Klappen in unterschiedliche Positionen zu überführen.

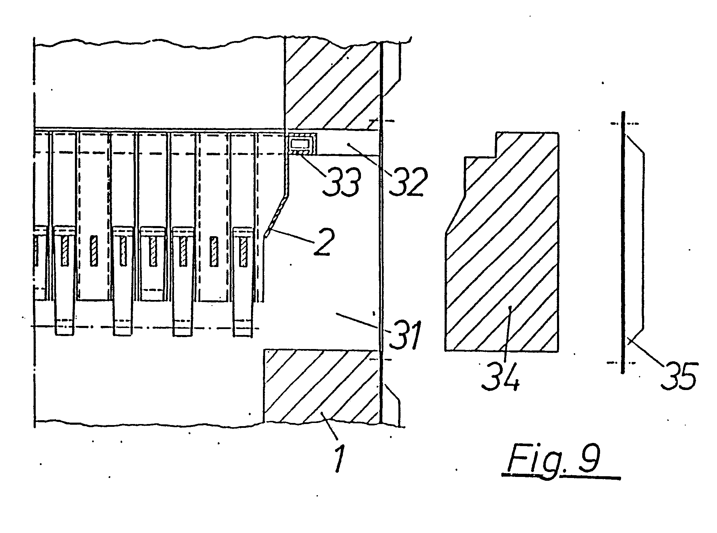

Statt der gemäß Fig. 1 beschriebenen Modulbauweise des Schachtes kann die Schachtwandung 1 auch als durchgehende Schachtwandung ausgebildet sein und entsprechend dem Beispiel der Fig. 9 Fensteröffnungen 31 aufweisen, in welche die Roste in der Form der bereits genannten Baueinheiten seitlich einschiebbar sind. Dabei werden die Roste, welche in der beschriebenen Weise aus ortsfesten und beweglichen Roststäben bestehen, in nutförmigen Ausnehmungen 32 der seitlichen Schachtwandungen über eine Trageinrichtung 33 gehalten. Zum Verschließen der Fensteröffnung 21 in der Schachtwandung 1 dient ein angepaßtes Füllstück 34 in Verbindung mit einer Deckplatte 35, welche mit der Schachtwandung 1 nach Einsetzen des Füllstückes 34 verschraubt wird. Durch die vorgenannte Ausbildung ist es möglich, mit geringem Aufwand die als Baueinheit ausgebildeten Roste kurzfristig auszutauschen.

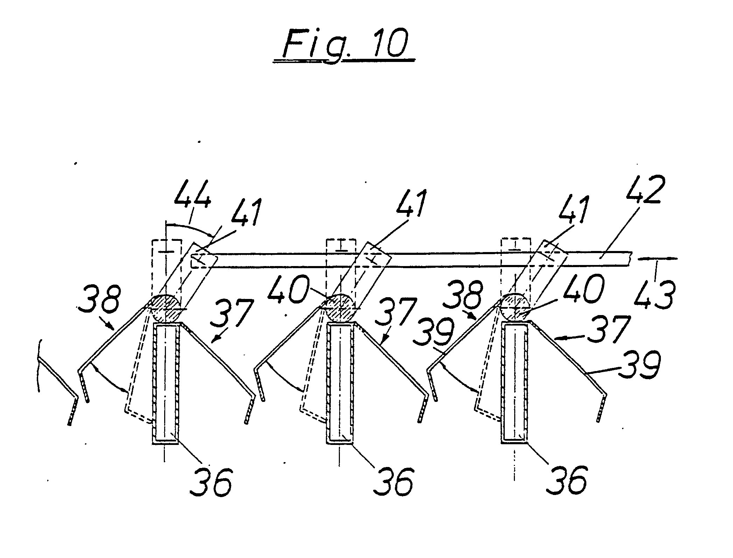

Statt der in den Figuren 2 bis 9 wiedergegebenen Roste mit aus der Rost ebene herausbewegbaren Roststäben können die Roste auch gemäß Fig. 10 eine Ausbildung aufweisen, bei der parallel zueinander verlaufende Tragstäbe 36 in einer ortsfesten rahmenförmigen Trageinrichtung ähnlich der Trageinrichtung 33 in Fig. 9 abgestützt sind. Die Tragstäbe 36 können dabei als Hohlstäbe ausgebildet sein. Oberhalb eines jeden Tragstabes 36 sind jeweils dachförmig zueinander verlaufende Lamellen 37 und 38 vorgesehen, die quer zu ihrer Längsrichtung verlaufende Durchtrittsschlitze 39 aufweisen. Dabei ist die jeweilige Lamelle 37 fest an dem zugeordneten Tragstab 36 gehalten, beispielsweise angeschweißt, während jede Lamelle 38 mit einer oberhalb des Tragstabes vorgesehenen Schwenkachse 40 fest verbunden ist. Die Schwenkachsen sind dabei in der rahmenförmigen Trageinrichtung gelagert und mit außerhalb der Rostfläche aufragenden Schwenkarmen 41 verbunden, die ihrerseits gelenkig an einer Schubstange 42 angreifen, die mit einem Schwenkantrieb verbunden ist, so daß sie in Richtung des Doppelpfeiles 43 hin- und herbewegbar ist und auf diese Weise die Schwenkarme 41 in Richtung des Doppelpfeiles 44 verschwenkt werden können. Hierdurch lassen sich die schwenkbaren Lamellen 38 von der ausgezogenen in die gestrichelte Linie überführen und erfüllen so eine ähnliche Aufgabe, wie sie in Verbindung mit den heb- und senkbaren Roststäben 19 und 20 der Fig. 2 bis 9 beschrieben wurde.

Auch die Rostanordnung nach Fig. 10 kann als vorgefertigte Einheit hergestellt und mit einem entsprechenden Kurbeltrieb für die Verschwenkung der Lamellen 38 verbunden und in eine Modulbauweise des Schachtes eingebaut werden.

**Patentansprüche**

1. Schachtanordnung für thermische und/oder Stoffübertragungsvorgänge zwischen einem Gas und einem rieselfähigen Schüttgut mit einer einheitlichen Körnung von mindestens 6 mm, bei welcher der Innenraum des Schachtes in Kammern (3) zur Aufnahme von die Kammern nur teilweise füllenden Haufwerken (4) des Schüttgutes durch Zwischenböden unterteilt ist, die verstellbare Bodenelemente zum chargenweisen Hindurchfördern der Haufwerke durch den Schacht aufweisen, und bei der in den Schachtwandungen (1) freie Durchtrittsöffnungen (12 bis 14) für das Gas zu wenigstens einigen Kammern in den freien Raum oberhalb des jeweiligen Haufwerkes angeordnet sind und oberhalb oder im oberen Teil des Schachtes eine Einrichtung zum Zuführen und gleichmäßigen Verteilen des die Kammern (3) jeweils nur teilweise füllenden vordosierten Gutes über den Schachtquerschnitt auf einen den Boden der obersten Kammer (3a) bildenden Rost (2) vorgesehen ist, <u>dadurch gekennzeichnet</u>, daß die Zwischenböden zur Bildung der weiteren Kammern ebenfalls aus Rosten (2) bestehen und alle Roste wenigstens teilweise aus beweglichen Roststäben (19, 20) bestehen, die mit Betätigungseinrichtungen (22, 23) und wenigstens einer diesen zugeordneten steuerbaren Antriebseinrichtung zur vorübergehenden und zeitlich gesteuerten Vergrößerung der freien Zwischenräume zwischen benachbarten Roststäben durch Herausbewegen eines Teiles der Roststäbe aus der Rostebene ausgerüstet sind, und daß mit den Durchtrittsöffnungen in den Schachtwandungen (1) Gaszu- und abführungsleitungen (12, 13 bzw. 14, 15) mit diesen zugeordneten Steuerungseinrichtungen verrbunden sind.

2. Schachtanordnung nach Anspruch 1, <u>dadurch gekennzeichnet</u>, daß die beweglichen Roststäbe (19, 20) eines jeden Rostes (2) durch eine Verbindung ihrer Enden wenigstens eine Baueinheit bilden, welche durch die Betätigungseinrichtung(en) (22, 23) und die steuerbare Antriebseinrichtung aus der Ebene der festen Roststäbe herausbewegbar ist.

3. Schachtanordnung nach Anspruch 2, <u>dadurch gekennzeichnet</u>, daß die oder jede aus den beweglichen Roststäben (19, 20) gebildete Baueinheit mittels einer Hubeinrichtung in eine Ebene außerhalb der Ebene der festen Roststäbe absenkbar und in die Ebene der festen Roststäbe (18) rückführbar gehalten ist.

4. Schachtanordnung nach einem der vorhergehenden Ansprüche, <u>dadurch gegekennzeichnet</u>, daß die beweglichen Roststäbe (19, 20) der oder jeder Baueinheit über die festen Roststäbe (18) hinaus verlängert ausgebildet und über diese Verlängerungen (19a, 20a) miteinander verbunden sind, und daß als Hubeinrichtung ein an den miteinander verbundenen Enden der Roststäbe angreifenden Kurbeltrieb (22, 23) vorgesehen ist.

5. Schachtanordnung nach einem der vorhergehenden Ansprüche, <u>dadurch gekennzeichnet</u>, daß mehrere Baueinheiten beweglichen Roststäbe (19, 20) je Rost (2) vorgesehen und in verschiedene Ebenen außerhalb der Ebene der festen Roststäbe (18) überführbar sind.

6. Schachtanordnung nach einem der vorhergehenden Ansprüche, <u>dadurch gekennzeichnet</u>, daß die Roststäbe (18 bis 20) als Hohlprofilstäbe ausgebildet sind.

7. Schachtanordnung nach einem der vorhergehenden Ansprüche, <u>dadurch gekennzeichnet</u>, daß der Schacht aus ringförmig geschlossenen Modulteilen (5) mit jeweils einem Rost (2) aufgebaut ist und in wenigstens einigen der Modulteile in den Wandungen (1) Durchtrittsöffnungen für die Zu- bzw. Abführung der Gase vorgesehen sind.

8. Schachtanordnung nach einem der vorhergehenden Ansprüche, <u>dadurch gekennzeichnet</u>, daß die Roste (2) als seitlich durch verschließbare Fensteröffnungen (31) in die Schachtwandungen (1) einschiebbare Baueinheiten ausgebildet sind.

9. Schachtanordnung nach einem der vorhergehenden Ansprüche, dadurch gekennzeichnet, daß jeweils unterhalb der festen Roststäbe (18) in den Schachtwandungen (1) auf der Schachtinnenseite Ausnehmungen (21) zur Aufnahme der Betätigungseinrichtungen (22, 23) für die beweglichen Roststäbe (19, 20) bzw. für die von diesen gebildeten Baueinheiten vorgesehen und außerhalb der Schachtwandung Antriebsvorrichtungen für die Betätigungseinrichtungen angeordnet sind.

10. Schachtanordnung nach einem der vorhergehenden Ansprüche, dadurch gekennzeichnet, daß die Roststäbe (18 bis 20) im querschnitt gesehen in ihrem oberen Teil eine hinterschnittene Profilierung (24) aufweisen und mit aufgeschobenen austauschbaren, reiterförmigen Profilteilen (25) ausgerüstet sind, welche ein Verschließen der Zwischenräume zwischen benachbarten Roststäben durch das Gut verhindern.

11. Schachtanordnung nach Anspruch 10, dadurch gekennzeichnet, daß die reiterförmigen Profilteile (25) hufeisenförmig mit in Längsrichtung der Roststäbe weisenden Vorsprüngen als Anschläge (26) mit benachbarten profilteilen ausgebildet sind.

12. Schachtanordnung nach einem der vorhergehenden Ansprüche, dadurch gekennzeichnet, daß unmittelbar unterhalb wenigstens eines Rostes (2) ein gitterrostförmiger Einsatz (29) zur Bildung paralleler Strömungskanäle (30) vorgesehen ist, und daß um horizontale Achsen (27, 28) drehbare Klappen (17) in den Strömungskanälen vorgesehen sind, welche den Feldern eines Schachbrettes entsprechend wechselweise oder in Gruppen in die Schachtebene oder senkrecht hierzu verschwenkbar sind.

13. Schachtanordnung nach Anspruch 12, dadurch gekennzeichnet, daß je Klappenreihe zwei übereinander angeordnete horizontale Achsen (27, 28) für die wechselweise Anordnung und gruppenweise Verschwenkung der Klappen (17) vorgesehen sind.

14. Schachtanordnung nach einem der vorhergehenden Ansprüche, dadurch gekennzeichnet, daß wenigstens zwischen zwei benachbarten Rosten (2) eine aus schwenkbaren Lamellen (16) gebildete und durch Verstellen der Lamellen in die Schließ- und Offenstellung überführbare Trennwand vorgesehen ist.

15. Schachtanordnung nach einem der vorhergehenden Ansprüche, dadurch gekennzeichnet, daß die Roststäbe (18, 19 und 20) sowie die übrigen tragenden Teile der Roste (2) und der gitterrostförmige Einsatz (29) sowie die darin gehaltenen Klappen (17) und Achsen (27, 28) aus SisiC oder reaktionsgesintertem SiC bestehen.

16. Schachtanordnung nach dem Gattungsbegriff des Anspruches 1, ggf. in Verbindung mit den Ansprüchen 7 und/oder 8, dadurch gekennzeichnet, daß oberhalb oder im oberen Teil des Schachtes eine Einrichtung zum Zuführen und gleichmäßigen Verteilen des die Kammern (3) jeweils nur teilweise füllenden vordosierten Gutes über den Schachtquerschnitt auf einen den Boden der obersten Kammer (3a) bildenden Rost (2) vorgesehen ist, daß die Zwischenböden zur Bildung der weiteren Kammern ebenfalls aus Rosten bestehen und jeder Rost aus parallel zueinander verlaufenden ortsfesten Tragstäben (36) mit darüber angeordneten dachförmig geneigt zueinander verlaufenden Lamellen (37, 38) besteht, de quer zu ihrer Längsrichtung angeordnete Durchtrittsschlitze (39) aufweisen und von denen jeweils eine Lamelle (37) fest und die andere (38) verschwenkbar oberhalb des Tragstabes gehalten ist, sowie alle verschwenkbar gehaltenen Lamellen eines Rostes mit einem gemeinsamen steuerbaren Schwenkantrieb verbunden sind.

**Claims**

1. A shaft arrangement for thermal and/or material transfer processes between a gas and a fluid bulk material with a uniform grain size of at least 6 mm, in which the inner space of the shaft is siudivided into chambers (3) for the accommodation of the heaps (4) of the bulk material, which heaps only partially fill the chambers, by intermediate floors, which have adjustable floor elements for the batchwise throughput of the heaps through the shaft, and in which there are arranged in the shaft walls (1) free passage openings (12 to 14) for the gas to at least some chambers in the free space above the appropriate heap, and above or in the upper part of the shaft is provided an arrangement for feeding in and uniformly spreading the premetered material which is only partially filling the chambers (3) in each case, over the shaft cross section on a grate (2) forming the floor of the uppermost chamber (3a), characterized in that the intermediate floors for the formation of the other chambers likewise consist of grates (2) and all the grates consist, at least partially, of movable grate bars (19, 20), which are equipped with actuation arrangements (22, 23) and at least one controllable drive arrangement associated with the latter for the transitory increase, which is controlled with respect to time, of the free spaces between adjacent grate bars by moving out one part of the grate bars out of the grate plane, and in that gas supply and removal lines (12, 13 or 14, 15) are connected with the passage openings in the shaft walls (1) by these associated control arrangements.

2. A shaft arrangement according to Claim 1, characterized in that the movable grate bars (19, 20) of each grate (2) form at least one constructional unit by a connection of their ends, which constructional unit can be moved out of the plane of the fixed grate bars by the actuation arrangement(s) (22, 23) and the controllable drive arrangement.

3. A shaft arrangement according to Claim 2, characterized in that the or each constructional unit formed by the movable grate bars (19, 20) can be lowered by means of a lifting device into a plane outside the plane of the fixed grate bars and is held in the plane of the fixed grate bars (18) in a retractable manner.

4. A shaft arrangement according to any one of the preceding Claims, characterized in that the movable grate bars (19, 20) of the or each constructional unit is constructed so as to be extended beyond the fixed grate bars (18) and are connected together via these extensions (19a, 20a), and in that a connecting rod assembly (22, 23), engaging at the ends of the grate bars connected together, is provided as lifting device.

5. A shaft arrangement according to any one of the preceding Claims, characterized in that several constructional units of movable grate bars (19, 20) are provided per grate (2) and can be guided in different planes outside the plane of the fixed grate bars (18).

6. A shaft arrangement according to any one of the preceding Claims, cnaracterized in that the grate bars (18 to 20) are constructed as hollow section bars.

7. A shaft arrangement according to any one of the preceding Claims, characterized in that the shaft is built up of annularly closed module parts (5) with a grate (2) in each case and that passage openings for the supply and removal of the gases are provided in the walls (1) in at least some of the module parts.

8. A shaft arrangement according to any one of the preceding Claims, characterized in that the grates (2) are made as constructional units which can be inserted laterally through sealable window openings (31) in the shaft walls (1).

9. A shaft arrangement according to any one of the preceding Claims, characterized in that recesses (21) for the accommodation of the actuation devices (22, 23) for the movable grate rods (19, 20) or for constructional units made up from these are provided, in each case, below the fixed grate bars (18) in the shaft walls (1) on the shaft interior and drive devices for the actuation arrangements are arranged outside the shaft wall.

10. A shaft arrangement according to any one of the preceding Claims, characterized in that the grate bars (18 to 20) have in their upper part, as seen in cross-section, an undercut section (24) and are equipped with pushed-on, exchangeable, slider-form section parts (25) which prevent any closure of the intermediate spaces between adjacent grate bars by the material.

11. A shaft arrangement according to Claim 10, characterized in that the slider-form section parts (25) are made horse-shoe shaped with projections, pointing in the longitudinal direction of the grate bars as stops (26) with adjacent section parts.

12. A shaft arrangement according to any one of the preceding Claims, characterized in that a grate-type insert (29) is provided directly below at least of one the grates (2) for the formation of parallel flow channels (30) , and in that flaps (17), which are rotatable about horizontal axes (27, 28), are provided in the flow channels, which flaps can be pivoted corresponding to the squares of a chess board alternately or in groups in the shaft plane or at right angles thereto.

13. A shaft arrangement according to Claim 12, characterized in that each row of flaps are provided with horizontal axes (27, 28) arranged one over the other for the alternate arrangement and pivoting of the flaps (17) in groups.

14. A shaft arrangement according to any one of the preceding Claims, characterized in that at least one separating wall, which is made of pivotable lamellae (16) and can be put into the open or closed position by adjusting the lamellae, is provided between two adjacent grates (2).

15. A shaft arrangement according to any one of the preceding Claims, characterized in that the grate bars (18, 19 and 20) as well as the other supporting parts of the grate (2) and the grate type insert (29) as well as the flaps (17) retained therein and axes (27, 28) consist of SiSiC or reaction-sintered SiC.

16. A shaft arrangement according to the generic concept of Claim 1, if necessary in combination with claims 7 and/or 8, characterized in that above or in the upper part of the shaft, a device is provided for the supply and uniform spreading of the premetered material, in each case, only partially filling the chambers (3), over the shaft cross-section onto a grate (2) forming the floor of the uppermost chamber (3a), in that the intermediate floors, for the formation of the other chambers, also consist of grates and each grate consists of fixed support rods (36) which run parallel to each other and which have arranged above them lamellae (37, 38) which run inclined with respect to each other in a roof configuration, which lamellae have opening slits (39) arranged at right angles to the longitudinal direction and of which, in each case, one lamella (37) is held fixed and the other (38) is held pivotably above the carrying rod, as well as all the pivotably retained lamellae of one grate are connected to a common, controllable pivot drive.

**Revendications**

1. Dispositif à cuve pour des procédés de transfert de matière et/ou thermiques entre un gaz et un matériau en vrac susceptible de s'écoulor et présentant une granulométrie unitaire de 6 mm au moins, dans lequel le volume intérieur de la cuve est divisé en chambres (3) par des planchers intermédiaires pour recevoir des tas (4) de matériau en vrac ne remplissant que partiellement les chambres, planchers qui comportent des éléments de plancher réglables pour faire traverser la cuve par les tas, charge après charge, et dans lequel des ouvertures livres de passage (12 à 14) pour le gaz sont disposées dans les parois (1) de la cuve et débouchent, dans certaines chambres du moins, dans l'espace libre au-dessus de chaque tas, un dispositif étant prévu au-dessus de la cuve ou dans sa partie supérieure pour amener et répartir régulièrement sur la surface transversale de la cuve, sur une grille (2) constituant le plancher de la chambre supérieure (3a), la matière dosée au préalable qui ne remplit les chambres (3) que partiellement à chaque fois caractérisé par le fait que les planchers intermédiaires constituant les autres chambres sont également composés de grilles (2) et que toutes les grilles sont composées, au moins partiellement, de barreaux de grille mobiles (19, 20) qui sont équipés de dispositifs d'actionnement (22, 23) et d'au moins un dispositif d'entraînement associé à ceux-ci et pouvant être commandé pour l'augmentation provisoire et commandée dans le temps des intervalles libres entre des barreaux de grille voisins réalisée en déplaçant une partie des barreaux de grille pour les écarter du plan de la grille, et par le fait que des conduits d'admission et d'échappement des gaz (12, 13, et respectivement, 14, 15) comprenant des dispositifs de commande qui leur sont associés sont reliés aux ouvertures de passage ménagées dans la paroi (1) de la cuve.

2. Dispositif à cuve selon la revendication 1, caractérisé par le fait que les barreaux de grille mobiles (19, 20) de chaque grille (2), grâce à une liaison entre leurs extrémités, constituent au moins une unité de construction qui peut être déplacée hors du plan des barreaux de grille fixes grâce au(x) dispositif(s) d'actionnement (22, 23) et au dispositif d'entraînement pouvant être commandé.

3. Dispositif à cuve selon la revendication 2, caractérisé par le fait que l'unité ou chaque unité de construction constituée par les barreaux de grille mobiles (19, 20) est maintenue de façon à pouvoir être abaissée dans un plan extérieur à celui des barreaux de grille fixes au moyen d'un dispositif élévateur et ramenée dans le plan des barreaux de grille fixes (18).

4. Dispositif à cuve selon l'une des revendications précédentes, caractérisé par le fait que les barreaux de grille mobiles (19, 20) de l'unité ou de chaque unité de construction sont prolongés par rapport aus barreaux de grille fixes (18) et sont reliés entre aux par ces prolongements (19a, 20a), et par le fait que, comme dispositif élévateur, il est prévu une commande par bielle et manivelle (22, 23) qui est en prise avec les extrémités reliées entre elles des barreaux de grille.

5. Dispositif à cuve selon l'une des revendications précédentes, caractérisé par le fait que plusierus unités de construction de barreaux de grille mobiles (19, 20) sont prévues pour chaque grille (2) et peuvent être amenées dans divers plans extérieurs au plan des barreaux de grille fixes (18).

6. Dispositif à cuve selon l'une des revendications précédentes, caractérisé par le fait que les barreaux de grille mobiles (18 à 20) sont constitués par des barres profilées creuses.

7. Dispositif à cuve selon l'une des revendications précédentes, caractérisé par le fait que le cuve est formée de parties modulaires annulaires fermées (5) comprenant une grille (2) à chaque fois, et que des ouvertures de passage pour s'admission et l'échappement des gaz sont prévues dans les parois (1) de certaines au moins des parties modulaires.

8. Dispositif à cuve selon l'une des revendications précédentes, caractérisé par le fait que les grilles (2) sont constituées sous la forme d'unités de construction qui peuvent être introduites latéralement dans les parois (1) de la cuve à travers des fenêtres (31) pouvant être fermées.

9. Dispositif à cuve selon l'une des revendications précédentes, caractérisé par le fait que des évidements (21) destinés à recevoir les dispositifs d'actionnement (22, 23) des barreaux de grille mobiles (19, 20) ou, respectivement, des unités de construction formées par ceux ci, sont ménagés dans les parois (1) de la cuve, sur le côté intérieur de la cuve, et que des dispositifs d'entraînement des dispositifs d'actionnement sont disposés à l'extérieur de la paroi de la cuve.

10. Dispositif à cuve selon l'une des revendications précédentes, caractérisé par le fait que les barreaux de grille mobiles (18 à 20), vus en section transversale, présentent dans leur partie supérieure un profil en contre-dépouille (24) et sont munis de pièces profilées interchangeables en forme de cavaliers (25) qui sont passées sur eux et qui empêchent la fermeture par le matériau des intervalles entre les barreaux de grille voisins.

11. Dispositif à cuve selon l'une des revendications précédentes, caractérisé par le fait que les pièces profilées en forme de cavaliers (25) sont conformées en fer à cheval et comportent des sailles dirigées dans la direction longitudinale des barreaux de grille pour servir de butées (26) aux pièce profilées voisines.

12. Dispositif à cuve selon l'une des revendications précédentes, caractérisé par le fait que les pièce interchangeable (29) en forme de grille est prévue immédiatement au-dessous d'au moins une grille (2) pour former des canaux d'écoulement parallèles (30), et par le fait que des clapets (17) pouvant tourner autour d'axes horizontaux (27, 28) sont prévus dans les canaux d'écoulement et peuvent pivoter comme selon les cases d'un échiquier, alternativement ou par groupes, dans le plan de l'échiquier ou perpendiculairement à lui.

13. Dispositif à cuve selon la revendication 12, caractérisé par le fait que, pour chaque rangée de clapets, il est prévu deux axes horizontaux (27, 28) disposés l'un au-dessus de l'autre pour la disposition alternée et le pivotement des clapets (17).

14. Dispositif à cuve selon l'une des revendications précédentes, caractérisé par le fait qu'au moins entre deux grilles (2) voisines, il est prévu une cloison de séparation qui est constituée de lamelles pivotantes (16) et qui peut passer dans les positions d'ouverture et de fermeture par déplacement des lamelles.

15. Dispositif à cuve selon l'une des revendications précédentes, caractérisé par le fait que les barreaux de grille mobiles (18, 19, 20), ainsi que les autres parties porteuses des grilles (2) et la pièce interchangeable on forme de grille (29) avec les clapets (17) et les axes (27, 28) qui y sont maintenus, sont constitués de SiSiC ou de SiC fritté avec réaction.

16. Dispositif à cuve selon le préambule de la revendication 1, le cas échéant en relation avec les revendications 7 et/ou 8, caractérisé par le fait qu'un dispositifs est prévu au-dessus de la cuve ou dans sa partie supérieure pour amener et répartir régulièrement sur la surface transversale de la cuve, sur un grille (2) constituant le plancher de la chambre supérieure (3a), la matière dosée au préalable qui ne remplit les chambres (3) que partiellement à chaque fois, former les autres chambres sont également constitués de grilles, et que chaque grille est constituée de barres porteuses fixes (36) s'étendant parallèlement entre elles et comprenant des lamelle (37, 38), disposées au-dessus d'elles et inclinées l'une par rapport à l'autre en forme de toit, qui présentent des fentes de passage (39) disposées perpendiculairement à leur direction longitudinale, et dont, à chaque fois, l'une (37) est maintenue fixe et l'autre (38) est maintenue pivotante au-dessus de la barre porteuse, toutes les lamelles maintenues pivotantes d'une grille étant reliées à un dispositif de pivotement commun pouvant être commande.

*Fig. 1*

Fig. 2a

Fig. 2b

Fig. 3a

Fig. 3 b

_Fig. 4_

_Fig. 5_

_Fig. 6_

29 30 17
30

_Fig. 7_

29
30
30

17
17

_Fig. 8_

28
27
17
30
29

Fig. 9

# Fig. 10